# EUROPEAN PATENT SPECIFICATION

(11) **EP 1 213 311 B1**
(45) Date of publication and mention of the grant of the patent: **18.05.2005**
(21) Application number: 01128923.8
(22) Date of filing: 05.12.2001
(51) Int. Cl.: C08G 18/42, C08G 18/86

(54) **Oil-resistant elastomer member**
Ölabweisendes Elastomerbauteil
Elément élastomère oléofuge

(30) Priority: 05.12.2000 JP 2000369701
(43) Date of publication of application: 12.06.2002
(73) Proprietor: HOKUSHIN CORPORATION, Yokohama-shi, Kanagawa 230-0003 (JP)
(72) Inventor: Shirasaka, Hitoshi, c/o Hokushin Corporation, Yokohama-shi, Kanagawa 230-0003 (JP)
(74) Representative: Strehl Schübel-Hopf & Partner

(56) References cited:
- EP-A- 0 783 009
- DE-B- 1 152 535
- PATENT ABSTRACTS OF JAPAN vol. 012, no. 426 (C-542), 10 November 1988 (1988-11-10) & JP 63 154722 A (NIPPON MEKTRON LTD), 28 June 1988 (1988-06-28)
- PATENT ABSTRACTS OF JAPAN vol. 1997, no. 12, 25 December 1997 (1997-12-25) & JP 09 208820 A (KURARAY CO LTD), 12 August 1997 (1997-08-12)

## Description

### BACKGROUND OF THE INVENTION

### Field of the Invention

The present invention relates to an elastomer member for use in parts of industrial machinery and transport machinery such as automobiles. More particularly, the invention relates to an elastomer member useful for components which require oil resistance, such as hoses, O-rings, and packings.

### Background Art

Generally, rubber materials such as acrylonitrile-butadiene rubber (NBR), hydrogenated acrylonitrile-butadiene rubber. (HNBR), polysulfide rubber, acrylic rubber, epichlorohydrin rubber, and fluoroelastomer are employed as elastomers having oil resistance to hydrocarbon oils and fats such as gasoline and grease. The molecular structure of any of these rubber materials contains, in a main chain or a side chain, a polar group including an atom such as nitrogen, oxygen, sulfur, or halogen.

Although elastomers formed from any of these rubber materials exhibit oil resistance, most of these materials have poor elastomer properties other than oil resistance. The poor elastomer properties may be attributed to the essential feature of the aforementioned molecular structure. Briefly, by introducing a polar group such as a nitrile group, molecular movement is restricted, resulting in deterioration in rubber elasticity and low-temperature characteristics. When oxygen or sulfur is introduced in the main chain, molecular movement is maintained, but mechanical strength of the elastomer becomes poor. Thus, attaining both oil resistance and basic physical properties such as mechanical strength, low-temperature resistance, heat resistance, and rubber elasticity is very difficult.

### SUMMARY OF THE INVENTION

In view of the foregoing, the present inventors have carried out extensive studies on oil-resistant elastomer members, and have found that the aforementioned problems can be solved by use of an elastomer member formed of a poly-ester-urethane having a strictly limited composition. The present invention has been accomplished on the basis of this finding.

Thus, an object of the present invention is to provide an elastomer member endowed with oil resistance as well as well-balanced physical properties; i.e., high mechanical strength with excellent low-temperature resistance, heat resistance, and rubber elasticity.

Accordingly, in the first aspect of the present invention, there may be provided an oil-resistant elastomer member which has a rubber hardness in accordance with JIS A of 95° or less and an elongation at break of at least 100%, and which has oil resistance to a lubricating oil which highly swells an object, the elastomer member being formed by cross-linking a polyurethane obtainable through polyaddition of a polyester diol and a diisocyanate, wherein the polyurethane has an ester group concentration of at least 25 wt.% (5.7 mmol/g) and less than 35 wt.% (8 mmol/g) and a urethane group concentration of at least 7 wt.% (1.2 mmol/g) and less than 12 wt.% (2.0 mmol/g).

The polyester diol may be an aliphatic polyester diol containing no side chain.

The polyester diol may be poly(ε-caprolactone diol).

The oil-resistant elastomer member may have a glass transition temperature of -30°C or lower.

The oil-resistant elastomer member may exhibit a percent change in weight, caused by a lubricating oil which highly swells an object, of 20% or less.

### DETAILED DESCRIPTION OF PREFERRED EMBODIMENTS

In the present invention, the polyester composition of an elastomer member formed through cross-linking of a polyurethane obtained through polyaddition of polyester diol and diisocyanate is limited, to thereby provide an elastomer member endowed with oil resistance as well as well-balanced physical properties; i.e., high mechanical strength with excellent low-temperature resistance, heat resistance, and rubber elasticity.

Examples of the polyester diol to be used in the present invention include poly(E-caprolactone diol) which is formed through an addition reaction of ε-caprolactone and a C2-C9 linear glycol serving as a starting diol such as ethylene glycol or 1,4-butylene glycol, and aliphatic polyester diols which are formed through polycondensation of a C2-C9 linear glycol and a C2-C8 linear dibasic acid.

Examples of the diisocyanate to be caused to react with polyester diol include 2,4-toluene diisocyanate (TDI), 4 4'-diphenylmethane diisocyanate (MDI), p-phenylene diisocyanate (PPDI), 1,5-naphthalene diisocyanate (NDI), and 3,3-dimethyldiphenyl-4,4'-diisocyanate (tolidine diisocyanate) (TODI).

Examples of particularly preferred polyurethanes for constituting the elastomer member of the present invention include a polyurethane formed from poly(ε-caprolactone diol) and MDI.

### EXAMPLES

The present invention will next be described in detail by way of examples, which should not be construed as limiting the invention thereto. The oil-resistant rubber according to the present invention has been compared with NBR, HNBR, and millable poly-ester-urethane, which are generally employed as oil-resistant rubber.

### Example 1

ε-Caprolactone and 1,4-butylene glycol serving as a starting diol were subjected to an addition reaction, to thereby yield a polyester diol having a hydroxyl value of 110. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 28% and a urethane group concentration of 9.3%.

Dicumyl peroxide (Percumyl D, product of Nippon Oil & Fats Co., Ltd.) (2 parts by weight) was added to the obtained polyurethane rubber (100 parts by weight), and the resultant mixture was press-formed at 160°C for 20 minutes, to thereby yield an elastomer.

### Comparative Example 1

The procedure in Example 1 was repeated, except that commercially available HNBR (constituent acrylonitrile amount: 36%, iodine value: 28 g/100 g) (Zetpol 1020, product of Nippon Zeon Co., Ltd.) was used, to thereby yield an elastomer.

### Comparative Example 2

The procedure in Example 1 was repeated, except that commercially available NBR (constituent acrylonitrile amount: 50%) (Nipol DN003, product of Nippon Zeon Co., Ltd.) was used, to thereby yield an elastomer.

### Comparative Example 3

The procedure in Example 1 was repeated, except that commercially available NBR (constituent acrylonitrile amount: 35%) (N230S, product of Japan Synthetic Rubber Co., Ltd.) was used, to thereby yield an elastomer.

### Comparative Example 4

The procedure in Example 1 was repeated, except that commercially available NBR (constituent acrylonitrile amount: 18%) (Nipol DN401L, product of Nippon Zeon Co., Ltd.) was used, to thereby yield an elastomer.

### Test Example 1

Each of elastomer samples obtained in Example 1 and Comparative Examples 1 to 4 was evaluated in terms of general physical properties. Table 1 shows, the results. Hardness (JIS A) was measured in accordance with JIS K6253. Rebound resilience (%) was measured in accordance with JIS K6255. Compressive permanent strain (%) was measured in accordance with JIS K6262. Tensile strength (MPa) was measured in accordance with JIS K6251. Elongation at break (%) was measured in accordance with JIS K6251.

**Table 1**

| | Ex. 1 | Comp. Ex. 1 | Comp. Ex. 2 | Comp. Ex. 3 | Comp. Ex. 4 |
|---|---|---|---|---|---|
| Amount of constituent acrylonitrile (%) | ― | 36 | 50 | 35 | 18 |
| Hardness (JIS A) | 54 | 50 | 52 | 53 | 58 |
| Rebound resilience (%) | 73 | 69 | 10 | 57 | 80 |
| Compressive permanent strain (%) | 8 | 17 | 7 | 2 | breakage |
| Tensile strength (MPa) | 12.3 | 8.4 | 7.2 | 2.8 | 1.1 |
| Elongation at break (%) | 600 | 630 | 490 | 190 | 20 |
| Glass transition temp. (°C) | -38 | -29 | -4 | -26 | -46 |

As shown in Table 1, the sample in Example 1 shows remarkably high mechanical strength. NBR samples in Comparative Examples 1 to 4 exhibit upward shift of glass transition temperature with increasing nitrile content, leading to deterioration of low-temperature resistance. The glass transition temperature of the sample in Example 1 is lower than that of the samples in Comparative Examples 1 to 3 having an intermediate to high nitrile content, and nearly equal to that of the sample in Comparative Example 4 having a low nitrile content. The sample in Example 1 shows high rebound resilience, which is an index of rubber elasticity. Similar to the case of glass transition temperature, rebound resilience of NBR samples in the Comparative Examples is observed to depend on the nitrile content.

### Test Example 2

Each of elastomer samples obtained in Example 1 and Comparative Examples 1 to 4 was evaluated in terms of oil resistance. Table 2 shows the results. Oil resistance to lubricating oil was evaluated on the basis of physical properties after completion of immersion of each sample in ASTM No.3 oil at 100°C for 72 hours. Oil resistance to fuel oil was evaluated on the basis of physical properties after completion of immersion of each sample in FUEL C (isooctane/toluene = 50/50 vol.%) at 40°C for 72 hours. Hardness (JIS A), tensile strength, and elongation at break were measured in a manner similar to that employed in Test Example 1, and the percent increase in weight (%) was measured in accordance with JIS K6258.

**Table 2**

| | | Ex. 1 | Comp. Ex. 1 | Comp. Ex. 2 | Comp. Ex. 3 | Comp. Ex. 4 |
|---|---|---|---|---|---|---|
| Lubricating oil | Hardness (JIS A) | 46 | 40 | 54 | 53 | 57 |
| | Tensile strength (MPa) | 13.4 | 3.3 | 3.4 | 1.7 | breakage |
| | Elongation at break (%) | 460 | 370 | 260 | 100 | breakage |
| | Percent increase in weight (%) | 6.9 | 21.4 | 1.2 | 18.9 | 49 |
| Fuel oil | Hardness (JIS A) | 44 | 33 | 40 | 50 | 45 |
| | Tensile strength (MPa) | 8.2 | 3.3 | 2.4 | breakage | breakage |
| | Elongation at break (%) | 410 | 440 | 260 | breakage | breakage |
| | Percent increase in weight (%) | 32.9 | 64.7 | 31.2 | 55.5 | 100 |

As shown in Table 2, in terms of oil resistance to either lubricating oil (ASTM No. 3 oil) or fuel oil (FUEL C), the sample in Example 1 is much superior to the samples in Comparative Examples 1 and 3 having an intermediate to high nitrile content. The oil resistance of the sample in Example 1 is approximately equivalent to that of the sample in Comparative Example 2 having a very high nitrile content.

The swelling ratio of NBR samples of Comparative Examples 1 to 4 decreases as the nitrile content increases. However, the glass transition temperature serving as an index of low-temperature resistance is elevated, failing to attain both low-temperature resistance and oil resistance. In contrast, the sample in Example 1 shows excellent oil resistance while the glass transition temperature thereof remains low.

### Example 2

To the polyurethane rubber (100 parts by weight) which had been obtained in Example 1, carbon black (Seast SO, product of Tokai Carbon Co., Ltd.) (20 parts by weight), an age resister (Stabaxol P, product of Sumitomo Bayer Urethane Co., Ltd) (1.5 parts by weight), and a cross-linking agent (Percumyl D, product of Nippon Oil & Fats Co., Ltd.) (2 parts by weight) were added, and the resultant mixture was press-formed at 160°C for 20 minutes, to thereby yield an elastomer sample.

### Comparative Examples 5 to 8

In a manner similar to that of Example 2, except that an age resister (Antage RD, product of Kawaguchi Chemical Industry Co., Ltd.) (1.5 parts by weight) was used, the above additives were added at the same compositional proportions to each of the polymers of Comparative Examples 1 to 4, to thereby yield a compound. A cross-linked elastomer was prepared from the compound.

### Test Example 3

Each of the elastomer samples obtained in Example 2 and Comparative Examples 5 to 8 was evaluated in terms of general physical properties. Table 3 shows the results. Hardness (JIS A), rebound resilience, compressive permanent strain, tensile strength, and elongation at break were measured in a similar manner to that employed in Test Example 1.

**Table 3**

| | Ex. 2 | Comp. Ex. 5 | Comp. Ex. 6 | Comp. Ex. 7 | Comp. Ex. 8 |
|---|---|---|---|---|---|
| Hardness (JIS A) | 64 | 58 | 63 | 60 | 62 |
| Rebound resilience (%) | 71 | 63 | 8 | 49 | 73 |
| Compressive permanent strain (%) | 13 | 14 | 15 | 3 | 2 |
| Tensile strength (MPa) | 29.1 | 25.2 | 20.3 | 10.6 | 4.5 |
| Elongation at break (%) | 490 | 800 | 600 | 250 | 150 |

As shown in Table 3, remarkable reinforce effect provided by carbon black is observed for NBR elastomers in Comparative Examples 5 to 8, but the tensile strength thereof is inferior to that of the NBR elastomer in Example 2.

### Test Example 4

Each of elastomer samples obtained in Example 2 and Comparative Examples 5 to 8 was evaluated in terms of heat-aging resistance (at 150°C). Table 4 shows the physical properties measured after aging tests (after maintenance at 150°C for 72 hours and at 150°C for 168 hours). Hardness (JIS A), tensile strength, and elongation at break were measured in a similar manner to that employed in Test Example 1.

**Table 4**

| | | Ex. 2 | Comp. Ex. 5 | Comp. Ex. 6 | Comp. Ex. 7 | Comp. Ex. 8 |
|---|---|---|---|---|---|---|
| 150°C 72 hr | Hardness (JIS A) | 63 | 62 | 96 | 81 | 85 |
| | Tensile strength (MPa) | 26.4 | 23.7 | 12.1 | 6.9 | 2.4 |
| | Elongation at break (%) | 440 | 510 | 80 | 70 | 10 |
| 150°C 168 hr | Hardness (JIS A) | 60 | 65 | 99 | 99 | 97 |
| | Tensile strength (MPa) | 18.2 | 14.7 | 16 | 7.3 | 4.3 |
| | Elongation at break (%) | 360 | 280 | 10 | 4 | 1 |

As shown in Table 4, NBR elastomers in Comparative Examples 5 to 8 exhibit a great amount of change in physical property, particularly hardness. Among these elastomers, HNBR in Comparative Example 5, prepared by hydrogenating remaining double bonds provided from butadiene, exhibits comparatively favorable maintenance in physical property. However, the elastomer sample in Example 2 has been found to exhibit superior maintenance in physical property.

### Example 3

Adipic acid and 1,4-butanediol linear glycol were subjected to polycondensation, to thereby yield a polyester diol having a hydroxyl value of 112. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 32.0% and a urethane group concentration of 9.4%.

The urethane rubber and additives were mixed at the same compositional proportions as those employed in Example 1, to thereby yield a compound. A cross-linked elastomer was prepared from the compound.

### Example 4

Adipic acid and 1,4-butanediol/1,6-hexanediol (50/50 mol%) linear glycol were subjected to polycondensation, to thereby yield a polyester diol having a hydroxyl value of 96. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 31% and a urethane group concentration of 8.3%.

The urethane rubber and additives were mixed at the same compositional proportions as those employed in Example 1, to thereby yield a compound. A cross-linked elastomer was prepared from the compound.

### Comparative Example 9

Adipic acid and ethylene glycol/1,4-butanediol (50/50 mol%) linear glycol were subjected to polycondensation, to thereby yield a polyester diol having a hydroxyl value of 56. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 40.5% and a urethane group concentration of 5.2%.

The urethane rubber and additives were mixed at the same compositional proportions as those employed in Example 1, to thereby yield a compound. A cross-linked elastomer was prepared from the compound.

### Comparative Example 10

Adipic acid and 3-methyl-1,5-pentanediol glycol having a side-chain methyl group were subjected to polycondensation, to thereby yield a polyester diol having a hydroxyl value of 28. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 35% and a urethane group concentration of 2.8%.

The urethane rubber and additives were mixed at the same compositional proportions as those employed in Example 1, to thereby yield a compound. A cross-linked elastomer was prepared from the compound.

### Comparative Example 11

ε-Caprolactone and ethylene glycol serving as a starting diol were subjected to an addition reaction, to thereby yield a polyester diol having a hydroxyl value of 155. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 26% (6.0 mmol/g) and a urethane group concentration of 12.1% (2.1 mmol/g).

The urethane rubber and additives were mixed at the same compositional proportions as those employed in Example 1, to thereby yield a compound. A cross-linked elastomer was prepared from the compound.

### Comparative Example 12

Adipic acid and 1,6-hexanediol/neopentyl glycol(70/30 mol%) mixture of linear glycol and glycol having a side-chain group were subjected to polycondensation, to thereby yield a polyester diol having a hydroxyl value of 54. The polyester diol and MDI were subjected to polyaddition such that the amount of hydroxyl groups and that of isocyanate are adjusted to be equimol, to thereby yield a polyurethane rubber. The thus-formed polyurethane rubber had an ester group concentration of 27.0% and a urethane group concentration of 4.5%.

The urethane rubber and additives were mixed at the , same compositional proportions as those employed in Example 1, to thereby yield a compound. A cross-linked elastomer was prepared from the compound.

### Comparative Example 13

Commercially available millable poly-ester-urethane (trade name, Urepan 640G) was used as a urethane rubber.

The urethane rubber and additives were mixed at the same compositional proportions as those employed in Example 1, to thereby yield a compound. A cross-linked elastomer was prepared from the compound.

### Comparative Example 14

Commercially available millable poly-ester-urethane (trade name, Urepan 641G) was used as a urethane rubber.

The urethane rubber and additives were mixed at the same compositional proportions as those employed in Example 1, to thereby yield a compound. A cross-linked elastomer was prepared from the compound.

### Test Example 5

Each of millable poly-ester-urethane elastomer samples obtained in Examples 1, 3 and 4 and Comparative Examples 9 to 14 was evaluated in terms of general physical properties; percent changes in hardness (ΔHs) and weight (ΔM) after immersion in IRM 903 oil (lubricating oil which highly swells an object, listed in ISO/DIS 1817) at 100°C for 72 hours; and change in hardness (ΔHs) after the sample had been allowed to stand for 14 days at 85°C and 95% RH. Table 5 shows the results. Hardness Hs (JIS A) was measured in accordance with JIS K6253. Rebound resilience Rb (%) was measured in accordance with JIS K6255. Tensile strength Tb (MPa) and elongation at break Eb (%) were measured in accordance with JIS K6251.

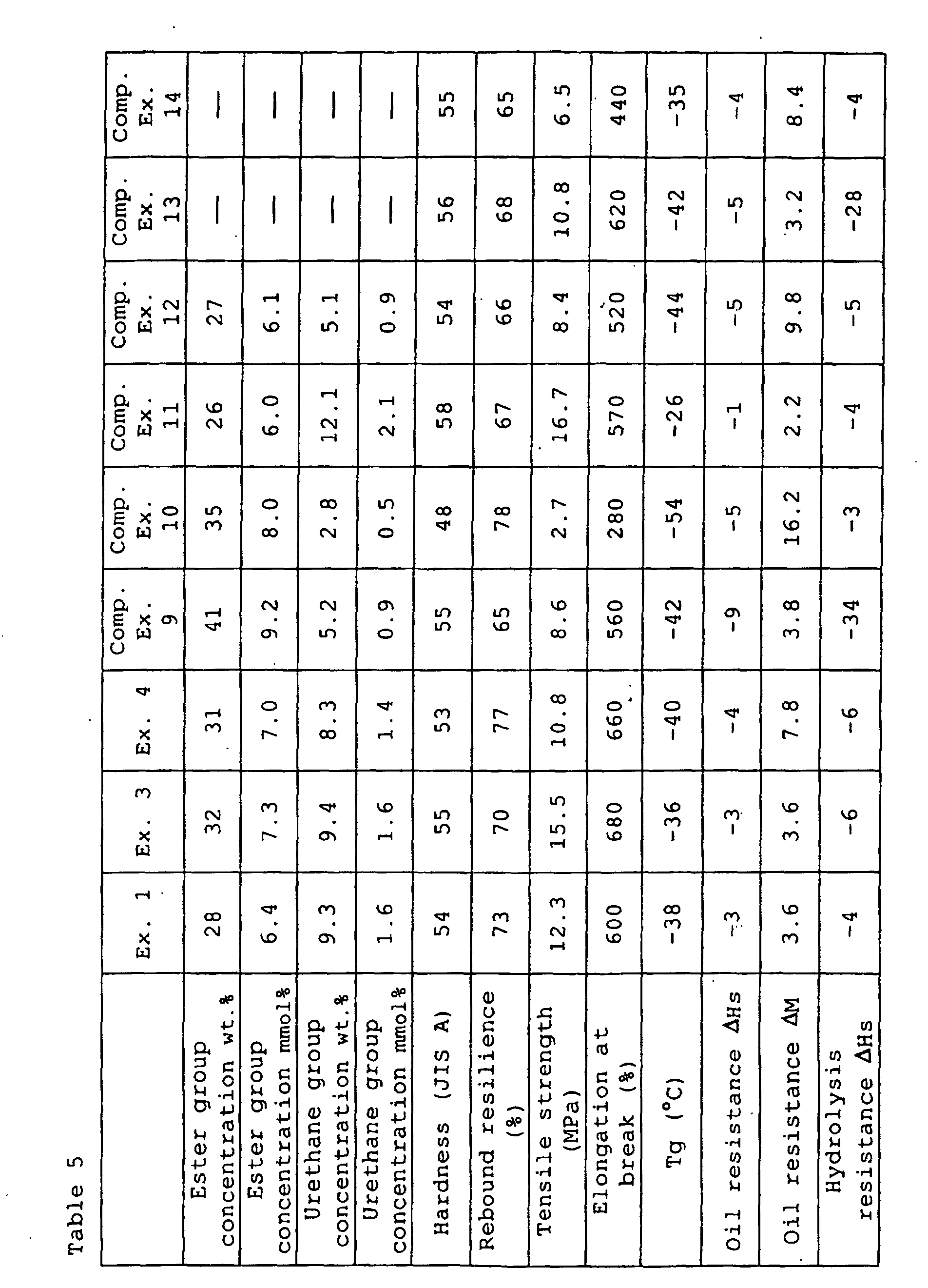

Table 5 provides comparison in physical properties of millable urethane elastomers having a variety of compositions. As shown in Table 5, the elastomer sample in Comparative Example 9 has considerably poor hydrolysis resistance conceivably due to an ester group concentration higher than the upper limit of the concentration range. The elastomer sample in Comparative Example 10 has poor mechanical strength, conceivably due to constituent polyester having a large amount of side-chain methyl groups. The elastomer sample in Comparative Example 11 has a high glass transition temperature (Tg) and poor low-temperature characteristics, conceivably due to a urethane group concentration higher than the upper limit of the concentration range. The sample of Comparative Example 12, which is formed from a polyester having a small amount of side-chain groups, exhibits poor mechanical strength and has a poor oil resistance as compared with the samples of Examples 3 and 4.

In contrast, elastomers in Examples 2 to 4, which are formed from a polyurethane having an ester group concentration of at least 25 wt.% (5.7 mmol/g) and less than 35 wt.% (8 mmol/g) and a urethane group concentration of at least 7 wt.% (1.2 mmol/g) and less than 12 wt.% (2.0 mmol/g), are found to be endowed with oil resistance and hydrolysis resistance as well as well-balanced physical properties; i.e., high mechanical strength with excellent low-temperature resistance and rubber elasticity.

As described herein above, according to the present invention, excellent oil resistance can be attained while low-temperature resistance is maintained, these two properties having been difficult to be attained by nitrile rubber or hydrogenated nitrile rubber. Thus, an elastomer member having well-balanced properties such as high mechanical strength and high rubber elasticity, which are required for elastomers, can be provided.

## Claims

1. An oil-resistant elastomer member which has a rubber hardness in accordance with JIS A of 95° or less and an elongation at break of at least 100%, and has oil resistance to a lubricating oil which highly swells an object, the elastomer member being formed by cross-linking a millable polyurethane obtainable through polyaddition of a polyester diol and a diisocyanate, **characterized in that** the polyurethane has an ester group concentration of at least 25 wt.% (5.7 mmol/g) and less than 35 wt.% (8 mmol/g) and a urethane group concentration of at least 7 wt.% (1.2 mmol/g) and less than 12 wt.% (2.0 mmol/g).

2. An oil-resistant elastomer member according to claim 1, wherein the polyester diol is an aliphatic polyester diol containing no side chain.

3. An oil-resistant elastomer member according to claim 1 or 2, wherein the polyester diol is poly(ε-caprolactone diol).

4. An oil-resistant elastomer member according to any one of claims 1 to 3, which has a glass transition temperature of -30°C or lower.

5. An oil-resistant elastomer member according to any one of claims 1 to 4, which exhibits a percent change in weight, caused by a lubricating oil which highly swells an object, of 20% or less.

## Patentansprüche

1. Ölbeständiges Elastomerelement mit einer Gummihärte nach JIS A von 95° oder weniger und einer Bruchdehnung von mindestens 100% sowie mit Ölbeständigkeit gegenüber einem Schmieröl, das zu starkem Quellen führen kann, wobei das Elastomerelement durch Vernetzen eines zerkleinerbaren Polyurethans gebildet ist, das durch Polyaddition eines Polyesterdiols und eines Diisozyanats herstellbar ist, **dadurch gekennzeichnet, daß** das Polyurethan eine Estergruppenkonzentration von mindestens 25 Gew-% (5,7 mmol/g) und weniger als 35 Gew-% (8 mmol/g) sowie eine Urethangruppenkonzentration von mindestens 7 Gew-% (1,2 mmol/g) und weniger als 12 Gew-% (2,0 mmol/g) aufweist.

2. Ölbeständiges Elastomerelement nach Anspruch 1, wobei das Polyesterdiol ein aliphatisches Polyesterdiol ohne Seitenkette ist.

3. Ölbeständiges Elastomerelement nach Anspruch 1 oder 2, wobei das Polyesterdiol Poly(ε-Caprolactondiol) ist.

4. Ölbeständiges Elastomerelement nach einem der Ansprüche 1 bis 3, das eine Glasübergangstemperatur von -30°C oder darunter aufweist.

5. Ölbeständiges Elastomerelement nach einem der Ansprüche 1 bis 4, das eine von einem Schmieröl, das zu starkem Quellen führen kann, verursachte prozentuale Gewichtsänderung von 20% oder weniger aufweist.

## Revendications

1. Elément élastomère oléofuge qui a une dureté de caoutchouc d'après JIS A de 95° ou moins et un allongement à la rupture d'au moins 100 %, et a de la résistance à l'huile vis-à-vis d'une huile lubrifiante qui gonfle fortement un objet, l'élément élastomère étant formé en réticulant un polyuréthane malaxable susceptible d'être obtenu par polyaddition d'un polyester diol et d'un diisocyanate, **caractérisé en ce que** le polyuréthane a une concentration en groupes esters d'au moins 25 % en poids (5,7 mmoles/g) et inférieure à 35 % en poids (8 mmoles/g) et une concentration de groupes uréthanes d'au moins 7 % en poids (1,2 mmole/g) et inférieure à 12 % en poids (2,0 mmoles/g).

2. Elément élastomère oléofuge selon la revendication 1, dans lequel le polyester diol est un polyester diol aliphatique ne contenant pas de chaîne latérale.

3. Elément élastomère oléofuge selon la revendication 1 ou 2, dans lequel le polyester diol est un poly(ε-caprolactone diol).

4. Elément élastomère oléofuge selon l'une quelconque des revendications 1 à 3, qui a une température de transition vitreuse de -30 °C ou moins.

5. Elément élastomère oléofuge selon l'une quelconque des revendications 1 à 4, qui présente un pourcentage de changement de poids, provoqué par une huile lubrifiante qui gonfle fortement un objet, de 20 % ou moins.
